# EUROPÄISCHE PATENTSCHRIFT

(11) **EP 1 640 585 B1**
(45) Veröffentlichungstag und Bekanntmachung des Hinweises auf die Patenterteilung: **20.02.2008**
(21) Anmeldenummer: 05103867.7
(22) Anmeldetag: 10.05.2005
(51) Int. Cl.: F02B 37/013

(54) **Verfahren zur mehrstufigen Aufladung in Verbrennungskraftmaschinen**
Method of multiple stage supercharging of internal combustion engines
Procédé de suralimentation à plusieurs étages pour moteur à combustion interne

(30) Priorität: 16.09.2004 DE 102004044819
(43) Veröffentlichungstag der Anmeldung: 29.03.2006
(73) Patentinhaber: ROBERT BOSCH GMBH, 70442 Stuttgart (DE)
(72) Erfinder: Vogt, Guenther, 83607 Holzkirchen (DE)

(56) Entgegenhaltungen:
- EP-A- 1 387 058
- DE-A1- 19 514 572
- US-A- 4 709 552
- US-A- 4 930 315
- US-A- 5 408 979

## Beschreibung

### Technisches Gebiet

Um die Leistung von Verbrennungskraftmaschinen zu erhöhen, werden Abgasturbolader eingesetzt. Der große Arbeitsbereich von Verbrennungskraftmaschinen in Personenkraftwagen erfordert eine Regelung des Abgasturboladers, um einen vorgegebenen Ladedruck zu erzielen. Hierzu wird bei einem mehrstufigen Aufladesystem (d.h. der Reihenschaltung von Abgasturboladern) die Frischluft zunächst in einem Niederdruckverdichter eines ersten Abgasturboladers und anschließend in einem Hochdruckverdichter eines zweiten Abgasturboladers komprimiert. Bei großen Frischluftmengen wird die Stopfgrenze des Hochdruckverdichters überschritten. Um zu vermeiden, dass der Hochdruckverdichter in diesem Fall als Drossel arbeitet, kann ein Teil der Frischluft über einen Verdichterbypass um den Hochdruckverdichter herum geleitet werden. Bei Frischluftmengen unterhalb der Stopfgrenze des Hochdruckverdichters ist der Verdichterbypass geschlossen.

### Stand der Technik

Um zu vermeiden, dass bei niedrigen Abgastemperaturen und einer geringen Abgasmenge, wie sie bei niedrigen Drehzahlen auftreten, der Druckaufbau im Abgasturbolader nicht verzögert wird, haben Abgasturbolader in Verbrennungskraftmaschinen, wie sie derzeit eingesetzt werden, eine geringe Eigenmasse und sprechen damit schon bei kleinen Abgasströmen an. Eine Erweiterung der Leistungsgrenzen des Abgasturboladers erfolgt zum Beispiel durch eine zweistufig geregelte Aufladung, wie sie aus Bosch, Kraftfahrttechnisches Taschenbuch, 23. Auflage, Vieweg, 1999, Seiten 445 ― 446 bekannt ist. Bei der zweistufig geregelten Aufladung sind zwei unterschiedlich große Abgasturbolader in Reihe geschaltet. Der Abgasmassenstrom strömt zunächst in eine Abgassammelrohrleitung. Von hier wird der Abgasmassenstrom über eine Hochdruckturbine expandiert. Bei großen Abgasmengen, wie sie bei hohen Drehzahlen auftreten, kann ein Teil des Abgasmassenstroms über einen Bypass um die Hochdruckturbine herumgeleitet werden. Anschließend wird der gesamte Abgasmassenstrom von einer der Hochdruckturbine nachgeschalteten Niederdruckturbine genutzt. Der angesaugte Frischluftmassenstrom wird zunächst durch eine Niederdruckstufe vorverdichtet und anschließend in der der Hochdruckstufe weiter verdichtet. Idealerweise wird der Frischluftmassenstrom zwischen der Niederdruckstufe und der Hochdruckstufe zwischengekühlt.

Bei kleinen Motordrehzahlen, d.h. bei kleinen Abgasmassenströmen, bleibt der die Hochdruckturbine umgehende Bypass vollständig geschlossen und der gesamte Abgasmassenstrom expandiert über die Hochdruckturbine. Hierdurch ergibt sich ein sehr schneller und hoher Ladedruckaufbau. Mit zunehmender Motordrehzahl wird die Expansionsarbeit kontinuierlich zur Niederdruckturbine verlagert, indem der Bypassquerschnitt entsprechend vergrößert wird. Durch die zweistufig geregelte Aufladung wird somit eine stufenlose Anpassung auf der Turbinen- und Verdichterseite an die Erfordernisse des Motorbetriebs ermöglicht. Durch den abnehmenden Abgasstrom über die Hochdruckturbine nimmt die Verdichterleistung des Hochdruckverdichters ab. Bei großen Frischluftmassenströmen erfolgt die Verdichtung lediglich mittels des Niederdruckverdichters. Der Hochdruckverdichter wird von der Frischluft durchströmt, wobei der Druck vor und hinter dem Hochdruckverdichter gleich ist. Sobald die Stopfgrenze des Hochdruckverdichters überschritten wird, d.h., dass der den Hochdruckverdichter durchströmende Frischluftstrom den Volumenstrom überschreitet, den der Hochdruckverdichter ohne Druckverlust fördern kann, wirkt der Hochdruckverdichter als Drossel und der Druck der Frischluft nimmt beim Durchströmen des Hochdruckverdichters ab. Um zu vermeiden, dass die Stopfgrenze überschritten wird, wird bei großen Frischluftmassenströmen ein Teil der Frischluft über einen Verdichterbypass um den Hochdruckverdichter herumgeführt. Im Verdichterbypass ist ein Ventil aufgenommen, welches den Verdichterbypass verschließt oder freigibt. Derzeit wird das Ventil über eine externe Steuereinheit angesteuert.

Aus US 4 709 552 A oder aus ATZ Automobiltechnische Zeitschrift 88, 1986, Seite 268, ist ein Zuschaltventil für eine Registeraufladung mit zwei Abgasturboladern bekannt. Über das Zuschaltventil wird die Frischluft bei niedrigen Drehzahlen zunächst an einem der beiden Verdichter vorbei geleitet. Erst bei höheren Drehzahlen wird der zweite Verdichter zugeschaltet. Hierzu ist im Bypass ein Verdrängerkörper aufgenommen, bei welchem im geschlossenen Zustand sowohl auf die Anströmseite als auf die Abströmseite eine Druckkraft wirkt. Solange die Druckkraft auf der Abströmseite größer ist als auf der Anströmseite, ist das Ventil geschlossen. Sobald der Druck auf der Anströmseite und der Abströmseite gleich groß ist, öffnet das Ventil. Da jeweils der gesamte Verdrängerkörper bewegt wird, muss zum Öffnen und Schließen des Bypasses eine relativ große Masse bewegt werden. Dies führt zu einem vergleichsweise langsamen Öffnen des Ventils.

Eine Brennkraftmaschine mit Aufladung in einer Hochdruckturbine und einer im Verhältnis zur Hochdruckstufe größeren Niederdruckstufe ist in DE-A 195 14 572 offenbart. Um eine möglichst verzögerungsfreie Aufladung zu erhalten, werden die Hochdruckturbine und die Niederdruckturbine zunächst in Reihe geschaltet. Bei etwa 50 bis 60% der Nenndrehzahl wird das Abgas über einen Bypass vollständig um die Hochdruckturbine herumgeleitet. Gleichzeitig wird somit auch der Betrieb des durch die Hochdruckturbine angetriebenen Hochdruckverdichters eingestellt, der mit einem von der Niederdruckturbine angetriebenen Niederdruckverdichter in Reihe geschaltet ist. In diesem Fall wird der Hochdruckverdichter über eine Ladeluftleitung umfahren, in der eine Rückschlagklappe vorgesehen ist, um zu verhindern, dass beim Betrieb des Hochdruckverdichters Ladeluft über die Ladeluftleitung zurückströmt. Der DE-A 195 14 572 ist jedoch keinerlei Hinweis dahingehend zu entnehmen, ob die Rückschlagklappe selbsttätig arbeitet oder ob diese von außen angesteuert wird. Auch ist nicht offenbart, bei welchem Differenzdruck die Rückschlagklappe die Ladeluftleitung verschließt.

### Darstellung der Erfindung

Bei dem Verfahren zur mehrstufigen Aufladung in Verbrennungskraftmaschinen mit einer Aufladevorrichtung wird zunächst Frischluft über einen Niederdruckverdichter geleitet. Mindestens ein Teil des verdichteten Luftstroms wird in einem Hochdruckverdichter weiter verdichtet. Der Rest der im Niederdruckverdichter verdichteten Frischluft wird über einen Verdichterbypass um den Hochdruckverdichter geleitet. Der Verdichterbypass wird durch ein selbsttätiges Ventil in Abhängigkeit vom Differenzdruck am Hochdruckverdichter freigegeben oder verschlossen, wobei das selbsttätige Ventil in dem Verdichterbypass so eingestellt ist, dass es öffnet, sobald der Druck hinter dem Hochdruckverdichter kleiner als der Druck vor dem Hochdruckverdichter ist. Die gesamte Frischluft wird schließlich der Verbrennungskraftmaschine zugeführt.

Dadurch, dass das selbsttätige Ventil erst dann öffnet, wenn der Druck hinter dem Hochdruckverdichter kleiner als der Druck vor dem Hochdruckverdichter ist, wird sichergestellt, dass der gesamte Luftstrom über den Hochdruckverdichter geleitet wird, solange dieser zur Verdichtung der Luft beiträgt. Erst wenn der Hochdruckverdichter nicht mehr zur Verdichtung der Luft beiträgt, sondern, im Gegenteil, sogar als Drossel wirkt ― dies geschieht sobald die Luft durch den Verdichter gedrückt wird, ohne dass dieser ausreichend angetrieben ist - wird der Verdichterbypass für die Ladeluft freigegeben.

Das selbsttätige Ventil öffnet bei einer Druckdifferenz von weniger als 100 mbar. Ein Vorteil der niedrigen Druckdifferenz, bei der der Verdichterbypass öffnet, ist, dass ein Rückschlagen oder ein Pulsieren des Ventilkörpers bei Druckschwankungen vermieden wird. Bei diesen Druckschwankungen wird gewöhnlich eine Druckdifferenz von 100 mbar im Hochdruckverdichter nicht unterschritten, so dass bei kleinen Druckdifferenzen von weniger als 100 mbar das selbsttätige Ventil auch beim Auftreten von Druckschwankungen geöffnet bleibt. Ein weiterer Vorteil des niedrigen Öffnungsdruckes besteht darin, dass sowohl die Hochdruck- als auch die Niederdruckstufe stets optimal eingesetzt werden können. Ein unnötiger Druckverlust wird auf diese Weise vermieden.

Das selbsttätige Ventil umfasst einen in einem Ventilgehäuse aufgenommenen Verdrängerkörper. Der Verdrängerkörper ist in mindestens zwei Verdrängerteile geteilt, wobei ein erstes Verdrängerteil, welches der Anströmseite zugewandt ist, den Verdichterbypass verschließt oder freigibt.

Der Vorteil eines selbsttätigen Ventils zum Öffnen oder Verschließen des Verdichterbypasses ist, dass auf einen Ventilsteller verzichtet werden kann. Auch ist es nicht erforderlich, eine Funktion zum Ansteuern des Ventils im Steuergerät zu implementieren.

In einer bevorzugten Ausführungsform wird die Frischluft in einem dem Niederdruckverdichter nachgeschalteten ersten Wärmetauscher abgekühlt. Die Frischluft wird vorzugsweise in einem zweiten Wärmetauscher abgekühlt, bevor diese in die Verbrennungskraftmaschine eintritt.

Der zur Verdichtung der Frischluft eingesetzte Niederdruckverdichter wird vorzugsweise durch eine Niederdruckturbine und der Hochdruckverdichter durch eine Hochdruckturbine betätigt. Die Niederdruckturbine und die Hochdruckturbine werden dabei vorzugsweise durch den die Verbrennungskraftmaschine verlassenden Abgasstrom angetrieben. Ein Teil des Abgases kann über einen Hochdruckbypass an der Hochdruckturbine und über einen Niederdruckbypass an der Niederdruckturbine vorbeigeleitet werden. Um die Abgasmenge einzustellen, die an der Hochdruckturbine bzw. an der Niederdruckturbine vorbeigeleitet wird, sind sowohl im Hochdruckbypass als auch im Niederdruckbypass vorzugsweise Ventile aufgenommen.

Insbesondere bei großen Durchsätzen des Niederdruckverdichters und des Hochdruckverdichters, wie sie bei hohen Drehzahlen auftreten, kann der Volumenstrom in den Hochdruckverdichter dessen Fördergrenze übersteigen. Dies führt dazu, dass der Hochdruckverdichter als Drossel wirkt und der Druck hinter dem Hochdruckverdichter niedriger ist als der Druck vor dem Hochdruckverdichter. Um zu vermeiden, dass der Volumenstrom in dem Hochdruckverdichter größer wird als die Förderleistung des Hochdruckverdichters, kann ein Teil der Frischluft über den Verdichterbypass um den Hochdruckverdichter geleitet werden.

### Zeichnung

Im Folgenden wird die Erfindung anhand einer Zeichnung näher beschrieben.

Es zeigt:
- Figur 1: ein Verfahrensfließbild einer zweistufigen Aufladung,
- Figur 2: eine Ausführungsform eines selbsttätigen Ventils mit darin aufgenommenem Verdrängerkörper,
- Figur 3: das Ventil gemäß Figur 2 bei geschlossenem Verdichterbypass.

### Ausführungsvarianten

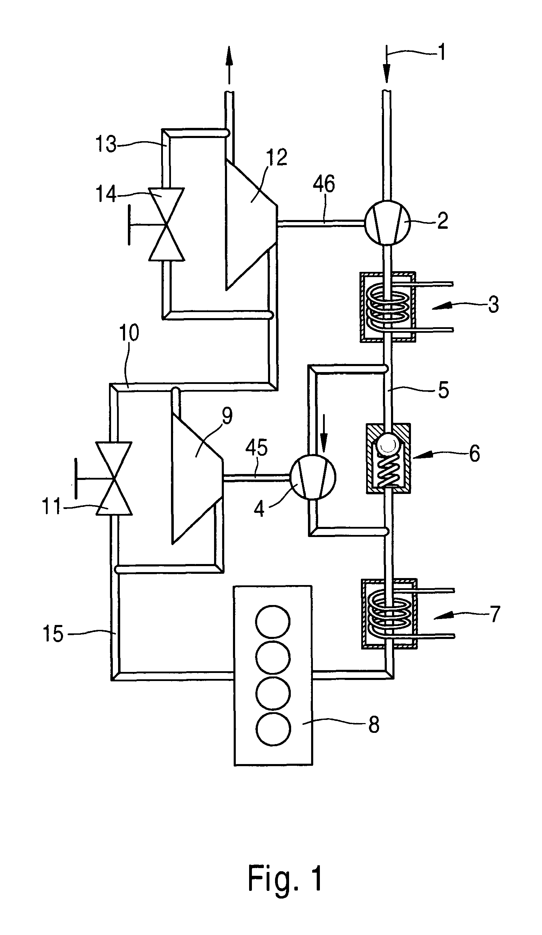

Figur 1 zeigt ein Fließbild einer zweistufigen Aufladung.

Frischluft 1 wird einem Niederdruckverdichter 2 zugeführt. Im Niederdruckverdichter 2 wird die Luft auf einen Druck oberhalb des Umgebungsdrucks komprimiert. Da sich die Luft beim Verdichten erwärmt, ist in der in Figur 1 dargestellten Ausführungsform dem Niederdruckverdichter ein erster Wärmetauscher 3 nachgeschaltet, in dem die die in dem Niederdruckverdichter 2 komprimierte Frischluft 1 abgekühlt wird. Es ist jedoch auch möglich, auf den Wärmetauscher 3 zu verzichten.

Die im Niederdruckverdichter 2 verdichtete Frischluft 1 wird einem Hochdruckverdichter 4 zugeführt. Im Hochdruckverdichter 4 wird die im Niederdruckverdichter 2 komprimierte Luft weiter verdichtet. Nach der Kompression der Frischluft 1 im Hochdruckverdichter 4 wird die Frischluft 1 einer Verbrennungskraftmaschine 8 zugeführt. Die Verbrennungskraftmaschne 8 kann entweder selbstzündend oder fremdgezündet betrieben werden.

Die Frischluft 1 wird vorzugsweise in einem zweiten Wärmetauscher 7 abgekühlt, bevor diese in die Verbrennungskraftmaschine 8 eintritt.

Damit der Volumenstrom durch den Hochdruckverdichter 4 nicht größer wird als die maximal mögliche Fördermenge, zweigt vor dem Hochdruckverdichter 4 ein Verdichterbypass 5 ab. Der Verdichterbypass 5 ist durch ein selbsttätiges Ventil 6 verschlossen. Das selbsttätige Ventil 6 ist zum Beispiel als Rückschlagventil ausgebildet, welches öffnet, sobald der Druck in Strömungsrichtung hinter dem selbsttätigen Ventil kleiner wird als der Druck vor dem selbsttätigen Ventil 6. Dieses Phänomen tritt dann auf, wenn der Volumenstrom in den Hochdruckverdichter 4 größer ist als dessen maximales Fördervermögen. In diesem Fall wirkt der Hochdruckverdichter 4 als Drossel.

Der Hochdruckverdichter 4 wird vorzugsweise über eine erste Welle 45 von einer Hochdruckturbine 9 angetrieben, welche von einem Abgasstrom 15 angetrieben wird, der von der Verbrennungskraftmaschine 8 abgegeben wird. Bei niedrigen Motordrehzahlen, das heißt bei kleinen Abgasmassenströmen, bleibt der Hochdruckbypass 10 vollständig geschlossen und der gesamte Abgasmassenstrom expandiert über die Hochdruckturbine 9. Hierdurch ergibt sich ein schneller und hoher Ladedruckaufbau. Mit zunehmender Drehzahl der Verbrennungskraftmaschine 8 und damit zunehmendem Abgasmassenstrom wird der Querschnitt des Hochdruckbypasses 10 durch Öffnen einer ersten Abgasregelklappe 11 kontinuierlich vergrößert. Durch die Vergrößerung des Querschnittes des Hochdruckbypasses 10 nimmt der Anteil des Abgasmassenstromes, der auf die Hochdruckturbine 9 wirkt, ab. Hierdurch kann die von der Hochdruckturbine 9 auf den Hochdruckverdichter 4 übertragene Leistung verringert werden. Mit abnehmender Verdichterleistung wird der Hochdruckverdichter 4 von der Frischluft 1 durchströmt, ohne diese weiter zu verdichten. Es stellt sich ein Druckverhältnis von Π = 1 ein, das heißt, dass der Druck vor dem Hochdruckverdichter und hinter dem Hochdruckverdichter gleich groß ist. Sobald der Frischluftstrom, der dem Hochdruckverdichter 4 zugeführt wird, größer ist als die maximale Fördermenge des Hochdruckverdichters 4, wirkt der Hochdruckverdichter 4 als Drossel und der Druck nimmt ab. Sobald der Druck hinter dem Hochdruckverdichter 4 niedriger ist als der Druck vor dem Hochdruckverdichter 4, öffnet das selbsttätige Ventil 6 den Verdichterbypass 5. Dies führt dazu, dass ein Teil der Frischluft 1 durch den Verdichterbypass 5 strömt und sich der Volumenstrom durch den Hochdruckverdichter 4 so einstellt, dass der Druck vor und hinter dem Hochdruckverdichter 4 gleich groß ist.

Der Öffnungsdruck des selbsttätigen Ventils 6 ist vorzugsweise auf einen Wert Δp < 100 mbar eingestellt. Das heißt, dass das selbsttätige Ventil öffnet, sobald der Druck hinter dem selbsttätigen Ventil 6 um die Öffhungsdruckdifferenz niedriger ist als der Druck vor dem selbsttätigen Ventil 6.

Der Niederdruckverdichter 2 wird vorzugsweise über eine zweite Welle 46 durch eine Niederdruckturbine 12 angetrieben. Über einen Niederdruckbypass 13, der durch eine zweite Abgasregelklappe 14 freigegeben oder verschlossen werden kann, kann der Abgasstrom um die Niederdruckturbine 12 herumgeleitet werden.

Die erste Abgasregelklappe 11 und die zweite Abgasregelklappe 14 werden vorzugsweise von einem externen Steuergerät angesteuert.

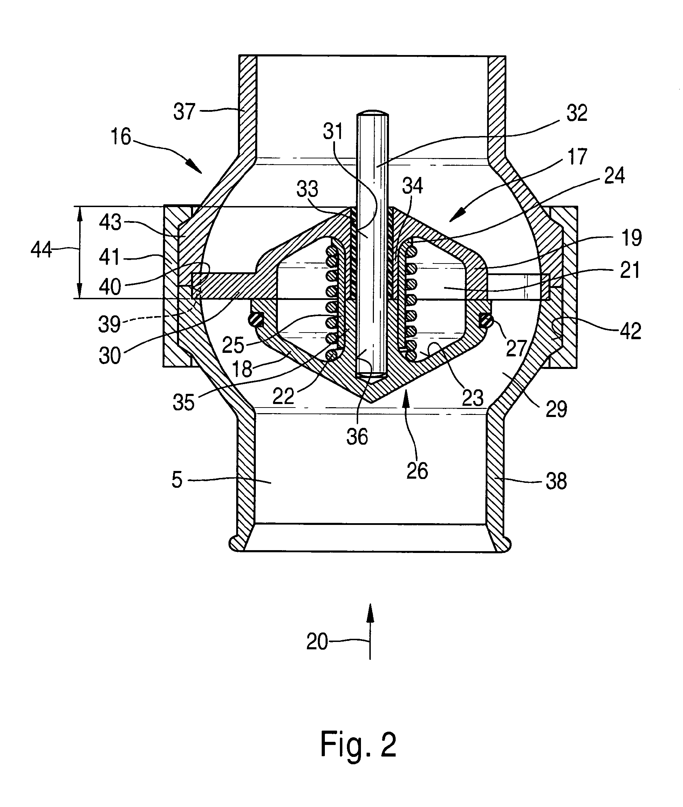

Figur 2 zeigt ein geöffnetes selbsttätiges Ventil.

Das selbsttätige Ventil 6 umfasst ein Ventilgehäuse 16 mit einem darin aufgenommenen Verdrängerkörper 17. Der Verdrängerkörper 17 ist in ein erstes Verdrängerteil 18 und ein zweites Verdrängerteil 19 geteilt. Das erste Verdrängerteil 18 ist der Anströmseite, das heißt der Seite des Verdrängerkörpers 17, auf die die Frischluftströmung zuerst trifft, zugewandt. Die Anströmrichtung ist durch den Pfeil mit Bezugszeichen 20 gekennzeichnet.

Zwischen dem ersten Verdrängerteil 18 und dem zweiten Verdrängerteil 19 ist ein Hohlraum 21 ausgebildet, in welchem ein Federelement 22 aufgenommen ist. Das Federelement 22 ist vorzugsweise eine als Druckfeder ausgebildete Spiralfeder.

Das Federelement 22 stützt sich mit einer Seite gegen eine Innenfläche 23 des ersten Verdrängerteils 18 und mit der zweiten Seite gegen einen Ansatz 24 einer Hülse 25, die mit dem zweiten Verdrängerteil 19 verbunden ist.

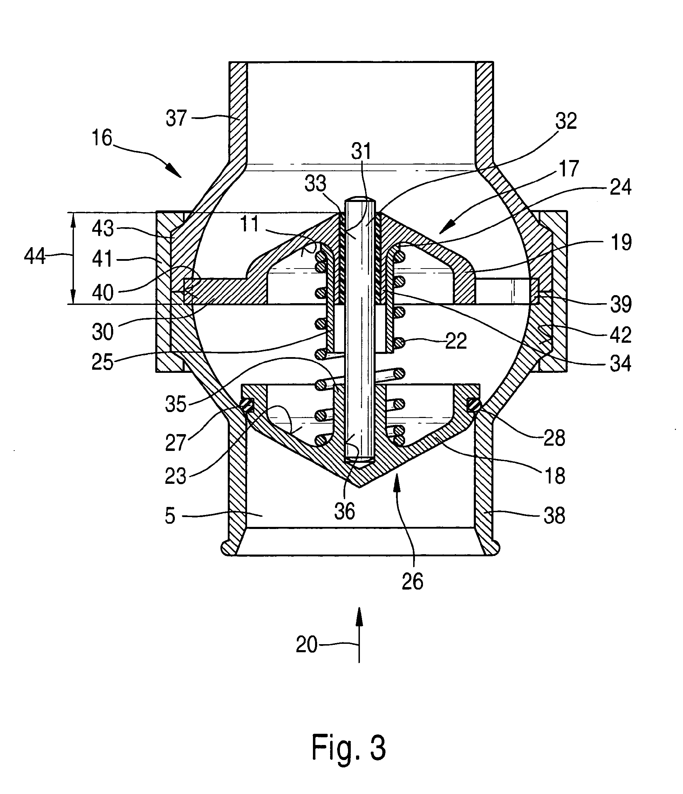

An einer Anströmseite 26, die der Innenfläche 23 des ersten Verdrängerteils 18 gegenüberliegt, wird das erste Verdrängerteil 18 angeströmt. Die auf die Anströmseite 26 auftreffende Luft übt eine Druckkraft auf das erste Verdrängerteil 18 aus. Solange die Druckkraft auf die Anströmseite 26 des ersten Verdrängerteils 18 größer ist als die Federkraft des Federelementes 22, die auf die Innenfläche 22 des ersten Verdrängerteils 18 wirkt, ist der Verdichterbypass 5 geöffnet. Mit abnehmendem Druck der Luft im Verdichterbypass 5 nimmt die Druckkraft auf die Anströmseite 26 des ersten Verdrängerteils 18 ab. Sobald die Druckkraft auf die Anströmseite 26 kleiner ist als die Federkraft des Federelements 22, bewegt sich das erste Verdrängerteil 18 entgegen der Anströmrichtung 20 der Luft und wird mit einem Dichtungselement 27 in einen Schließsitz 28 (vgl. Figur 3) gestellt.

Mit zunehmendem Druck der Luft im Verdichterbypass 5 nimmt die Druckkraft auf die Anströmseite 26 zu. Sobald die Druckkraft auf die Anströmseite 26 größer ist als die Federkraft des Federelementes 22 hebt sich das erste Verdrängerteil 18 aus seinem Schließsitz 28 und gibt den Verdichterbypass 5 frei. Hierzu umströmt die Frischluft den Verdrängerkörper 17 in einem Kanal 29, der zwischen dem Verdrängerkörper 17 und dem Ventilgehäuse 16 ausgebildet ist.

Das zweite Verdrängerteil 19 wird durch Stege 30 im Ventilgehäuse 16 gehalten. Die Stege 30 haben zum Beispiel rechteckförmigen, dreieckförmigen, kreisförmigen, tropfenförmigen oder jeden beliebigen anderen, dem Fachmann bekannten Querschnitt. In einer bevorzugten Ausführungsform ist der Querschnitt der Stege 30 tropfenförmig ausgebildet, wobei die halbkreisförmige Seite des tropfenförmigen Steges 30 von der Frischluft angeströmt wird. Hierdurch ist der Steg 30 besonders strömungsgünstig in Anströmrichtung ausgebildet.

Im zweiten Verdrängerteil 19 ist eine Bohrung 31 ausgeführt, in der ein Führungsstift 32 beweglich aufgenommen ist. An dem der Anströmseite 26 zugewandten Ende ist das erste Verdrängerteil 18 am Führungsstift 32 fixiert. Die Verbindung des Führungsstifts 32 mit dem ersten Verdrängerteil 18 kann kraftschlüssig oder formschlüssig erfolgen. So kann die Verbindung zum Beispiel durch Einschrumpfen, als Presspassung, als Schraubverbindung, als Klebverbindung oder auch als Schweißverbindung ausgeführt sein. Bevorzugt wird der Führungsstift 32 durch Einschrumpfen mit dem ersten Verdrängerteil 18 verbunden.

Die Länge des Führungsstifts 32 ist so bemessen, dass dieser bei geschlossenem Verdichterbypass 5 mit einem so großen Abschnitt in der Bohrung 31 aufgenommen bleibt, dass es nicht zu einem Verkanten oder Herausfallen des Führungsstifts 32 aus der Bohrung 31 kommt. Damit das erste Verdrängerteil 18 in Anströmrichtung 20 oder entgegen der Anströmrichtung 20 bewegt wird, ist die Bohrung 31 vorzugsweise parallel zur Anströmrichtung 20 ausgerichtet. Bevorzugt ist in der Bohrung 31 eine Hülse 33 aufgenommen, in der der Führungsstift 32 geführt ist. Die Hülse 33 ist vorzugsweise aus einem die Haftreibung reduzierenden Material, zum Beispiel PTFE gefertigt um die Gleiteigenschaften des Führungsstiftes 32 zu verbessern.

In der hier dargestellten Ausführungsform ist am zweiten Verdrängerteil 19 ein Zapfen 34 ausgebildet, der in den Hohlraum 21 hineinragt. Durch den Zapfen 34 wird die Bohrung 31, welche dem Führungsstift 32 aufnimmt, verlängert. Durch die verlängerte Bohrung 31 wird die Führungslänge des Führungsstiftes 32 in der Bohrung 31 vergrößert, wodurch gewährleistet wird, dass der Führungsstift 32 nicht in der Bohrung 31 verkantet.

Wie am zweiten Verdrängerteil 19 ist auch am ersten Verdrängerteil 18 ein Zapfen 35 ausgebildet, der in den Hohlraum 21 ragt. Im Zapfen 35 ist eine Bohrung 36 ausgeführt, welche den Führungsstift 32 aufnimmt. Der Führungsstift 32 ist in der Bohrung 36 kraft- oder formschlüssig mit dem ersten Verdrängerteil 18 verbunden.

Die Hülse 25 umschließt den Zapfen 34 am zweiten Verdrängerteil 19. Die Hülse 25 ist vorzugsweise kraftschlüssig, zum Beispiel mittels einer Schraubverbindung, am Zapfen 34 des zweiten Verdrängerteils 19 befestigt. Durch die Position des Ansatzes 24, welcher zum Beispiel durch eine Schraubbewegung der aufgeschraubten Hülse 25 in Richtung des ersten Verdrängerteils 18 oder von diesem wegbewegt werden kann, kann die Federkraft des Federelementes 22 eingestellt werden. Mit abnehmendem Abstand zwischen dem Ansatz 24 und der Innenfläche 23 des ersten Verdrängerteils 18 nimmt die Federkraft im Federelement 22 zu. Mit steigender Federkraft des Federelementes 22 ist eine größere Kraft und damit ein höherer Druck im Verdichterbypass 5 auf die Anströmseite 26 des ersten Verdrängerteils 18 zum Öffnen des Verdichterbypasses 5 erforderlich.

Zur Montage ist das Ventilgehäuse 16 vorzugsweise in ein erstes Gehäuseteil 37 und ein zweites Gehäuseteil 38 geteilt. Das Ventilgehäuse 16 ist vorzugsweise an der Position geteilt, an der ein Haltering 39 aufgenommen ist, mit welchem die Stege 30 des zweiten Verdrängerteils 19 verbunden sind. Der Haltering 39 wird von einer Nut 40 im Ventilgehäuse 16 aufgenommen. Um eine Montage zu ermöglichen, ist jeweils ein Teil der Nut 40 im ersten Gehäuseteil 37 und im zweiten Gehäuseteil 38 ausgebildet. Durch Zusammenfügen der Gehäuseteile 37, 38 nimmt der Querschnitt der Nut 40 die gleiche Form an wie der Querschnitt des Halteringes 39. Nach dem Zusammenfügen der Gehäuseteile 37, 28 und des zweiten Verdrängerteils 19 mit dem über die Stege 30 daran angebrachten Haltering 39 wird das Ventilgehäuse 16 von einer Bandschelle 41, zum Beispiel einer V-Bandschelle oder jeder anderen, dem Fachmann bekannten Bandschelle, umschlossen.

In der Bandschelle 41 ist eine Nut 42 und am Ventilgehäuse 16 ein Bund 43 ausgebildet. Der Querschnitt des Bundes 43 und der Querschnitt der Nut 42 sind gleich. Damit durch die Bandschelle 42 die Gehäuseteile 37, 38 miteinander verbunden werden, ist der Bund 43 jeweils zur Hälfte im ersten Gehäuseteil 37 und im zweiten Gehäuseteil 38 ausgebildet. Durch Zusammenfügen der Gehäuseteile 37, 38 entsteht so der Bund 43, dessen Querschnitt mit dem Querschnitt der Nut 43 in der Bandschelle 41 übereinstimmt. Eine haltbare Verbindung des ersten Gehäuseteils 37 mit dem zweiten Gehäuseteil 38 wird durch ein kraft- oder formschlüssiges Verbinden mit der Bandschelle 41 erreicht.

In Figur 3 ist ein geschlossenes selbsttätiges Ventil gemäß Figur 2 dargestellt. Solange der Druck der Frischluft im Verdichterbypass 5 so gering ist, dass die auf die Anströmseite 26 wirkende Druckkraft niedriger ist als die Federkraft des Federelementes 22 ist das erste Verdrängerteil 18 mit dem Dichtungselement 27 in den Schließsitz 28 gestellt. Sobald der Druck der Frischluft im Verdichterbypass 5 so groß ist, dass die Druckkraft auf die Anströmseite 26 größer wird als die Federkraft des Federelementes 22, hebt sich das erste Verdrängerteil 18 aus dem Schließsitz 28 und gibt so den Verdichterbypass 5 frei. Damit das Federelement 22 beim Zusammendrücken während der Bewegung des ersten Verdrängerteils 18 in Richtung des zweiten Verdrängerteils 19 nicht knickt, umschließt das Federelement 22 die Hülse 25. Eine vergrößerte Anlagefläche des Federelementes 22 an die Hülse 25 wird dadurch erreicht, dass die Hülse 25 über den Zapfen 34 hinausragt. Der Zapfen 35 am ersten Verdrängerteil 18 ist so gestaltet, dass dieser von der Hülse 25 aufgenommen und bei geöffnetem Verdichterbypass 5 von der Hülse 25 umschlossen wird. Beim Einfahren des Zapfens 25 in die Hülse 25 bildet sich zwischen dem Zapfen 34 am zweiten Verdrängerteil 19 und dem Zapfen 35 am ersten Verdrängerteil 18 innerhalb der Hülse 25 ein Luftpolster aus, welches die Bewegung des ersten Verdrängerteils 18 dämpft. Hierdurch wird ein hartes Anschlagen des ersten Verdrängerteils 18 an das zweite Verdrängerteil 19 und damit ein mögliches Rückprallen vermieden.

### Bezugszeichenliste

- 1: Frischluft
- 2: Niederdruckverdichter
- 3: erster Wärmetauscher
- 4: Hochdruckverdichter
- 5: Verdichterbypass
- 6: selbsttätiges Ventil
- 7: zweiter Wärmetauscher
- 8: Verbrennungskraftmaschine
- 9: Hochdruckturbine
- 10: Hochdruckbypass
- 11: erste Abgasregelklappe
- 12: Niederdruckturbine
- 13: Niederdruckbypass
- 14: zweite Abgasregelklappe
- 15: Abgasstrom
- 16: Ventilgehäuse
- 17: Verdrängerkörper
- 18: erstes Verdrängerteil
- 19: zweites Verdrängerteil
- 20: Anströmrichtung
- 21: Hohlraum
- 22: Druckfeder
- 23: Innenfläche des ersten Verträngerteils 18
- 24: Ansatz
- 25: Hülse
- 26: Anströmseite
- 27: Dichtungselement
- 28: Schließsitz
- 29: Kanal
- 30: Steg
- 31: Bohrung
- 32: Führungsstift
- 33: Hülse
- 34: Zapfen am zweiten Verdrängerteil 19
- 35: Zapfen am ersten Verdrängerteil 18
- 36: Bohrung im ersten Verdrängerteil 18
- 37: erstes Gehäuseteil
- 38: zweites Gehäuseteil
- 39: Haltering
- 40: Nut
- 41: Bandschelle
- 42: Nut
- 43: Bund
- 44: Führungslänge
- 45: erste Welle
- 46: zweite Welle

## Patentansprüche

1. Verfahren zur mehrstufigen Aufladung in Verbrennungskraftmaschinen mit einer Aufladevorrichtung, bei welchem Frischluft zunächst über einen Niederdruckverdichter (2) geleitet wird, mindestens ein Teil des verdichteten Luftstroms einen Hochdruckverdichter (4) durchströmt und der Rest der im Niederdruckverdichter (2) verdichteten Frischluft über einen Verdichterbypass (5) um den Hochdruckverdichter (4) geleitet wird, und schließlich die gesamte Frischluft der Verbrennungskraftmaschine (8) zugeführt wird, wobei der Verdichterbypass (5) durch ein selbsttätiges Ventil (6) in Abhängigkeit vom Differenzdruck am Hochdruckverdichter (4) freigegeben oder verschlossen wird, **dadurch gekennzeichnet, dass** das selbsttätige Ventil (6) einen in einem Ventilgehäuse (16) aufgenommenen Verdrängerkörper (17) aufweist, der in ein erstes Verdrängerteil (18) und ein zweites Verdrängerteil (19) geteilt ist, wobei das zweite Verdrängerteil (19) mit dem Ventilgehäuse verbunden ist und das der Anströmseite zugewandte, bewegliche erste Verdrängerteil (18) von dem zweiten Verdrängerteil (19) geführt ist und den Verdichterbypass (6) verschließt oder freigibt und im Verdrängerteil ein Federelement (22) aufgenommen ist, welches das erste Verdrängerteil (18) bei geschlossenem Ventil in seinen Schließsitz stellt, und dass das selbsttätige Ventil (6) öffnet, sobald der Druck hinter dem Ventil (6) um eine am Ventil eingestellte Öffnungsdruckdifferenz (Δp) niedriger als der Druck vor dem Ventil (6) ist, wobei die am Ventil eingestellte Öffnungsdruckdifferenz auf einen Wert kleiner als 100 mbar eingestellt ist.

2. Verfahren nach Anspruch 1, **dadurch gekennzeichnet, dass** an dem zweiten Verdrängerteil (19) ein Zapfen (34) ausgebildet ist und an dem ersten Verdrängerteil (18) ein Zapfen (35) ausgebildet ist und dass bei einer Bewegung des ersten Verdrängerteils (18) in Richtung des zweiten Verdrängerteils (19) zwischen dem Zapfen (34) am zweiten Verdrängerteil (19) und dem Zapfen (35) am ersten Verdrängerteil (18) innerhalb einer Hülse (25) ein Luftpolster ausgebildet wird, welches die Bewegung des ersten Verdrängerteils (18) dämpft.

3. Verfahren nach Anspruch 1 oder 2, **dadurch gekennzeichnet, dass** die Frischluft nach dem Verdichten im Niederdruckverdichter (2) in einem ersten Wärmetauscher (3) abgekühlt wird.

4. Verfahren nach einem der Ansprüche 1 bis 3, **dadurch gekennzeichnet, dass** die Frischluft vor Eintritt in die Verbrennungskraftmaschine (8) in einem zweiten Wärmetauscher (7) abgekühlt wird.

5. Verfahren nach einem der Ansprüche 1 bis 4, **dadurch gekennzeichnet, dass** der Hochdruckverdichter (4) durch eine Hochdruckturbine (9) und der Niederdruckverdichter (2) durch eine Niederdruckturbine (12) betätigt werden.

6. Verfahren nach Anspruch 5, **dadurch gekennzeichnet, dass** die Hochdruckturbine (9) und die Niederdruckturbine (12) von einem die Verbrennungskraftmaschine (8) verlassenden Abgasstrom angetrieben werden.

7. Verfahren nach Anspruch 5 oder 6, **dadurch gekennzeichnet, dass** ein Teil des Abgases über einen Hochdruckbypass (10) an der Hochdruckturbine (9) und ein Teil des Abgases über einen Niederdruckbypass (13) an der Niederdruckturbine (12) vorbeigeführt wird.

## Claims

1. Method for multi-stage supercharging in internal combustion engines, with a supercharging device, in which method fresh air is first conducted via a low-pressure compressor (2), at least part of the compressed air stream flows through a high-pressure compressor (4) and the rest of the fresh air compressed in the low-pressure compressor (2) is conducted via a compressor bypass (5) around the high-pressure compressor (4), and finally the entire fresh air is supplied to the internal combustion engine (8), the compressor bypass (5) being opened or closed by means of an automatic valve (6) as a function of the differential pressure at the high-pressure compressor (4), **characterized in that** the automatic valve (6) has a displacer body (17) which is received in a valve housing (16) and which is divided into a first displacer part (18) and a second displacer part (19), the second displacer part (19) being connected to the valve housing, and the movable first displacer part (18) which faces the inflow side being guided by the second displacer part (19) and closing or opening the compressor bypass (6), and the displacer part receiving a spring element (22) which, with the valve closed, sets the first displacer part (18) into its closing seat, and **in that** the automatic valve (6) opens as soon as the pressure downstream of the valve (6) is lower than the pressure upstream of the valve (6) by the amount of an opening-pressure difference (Δp) set at the valve, the opening-pressure difference set at the valve being set to a value lower than 100 mbar.

2. Method according to Claim 1, **characterized in that** a pin (34) is formed on the second displacer part (19) and a pin (35) is formed on the first displacer part (18), and **in that**, in the event of a movement of the first displacer part (18) in the direction of the second displacer part (19), an air cushion is formed between the pin (34) on the second displacer part (19) and the pin (35) on the first displacer part (18), within a sleeve (25), and damps the movement of the first displacer part (18).

3. Method according to Claim 1 or 2, **characterized in that** the fresh air is cooled in a first heat exchanger (3) after compression in the low-pressure compressor (2).

4. Method according to one of Claims 1 to 3, **characterized in that** the fresh air is cooled in a second heat exchanger (7) before entry into the internal combustion engine (8).

5. Method according to one of Claims 1 to 4, **characterized in that** the high-pressure compressor (4) is actuated by a high-pressure turbine (9) and a low-pressure compressor (2) is actuated by a low-pressure turbine (12).

6. Method according to Claim 5, **characterized in that** the high-pressure turbine (9) and the low-pressure turbine (12) are driven by an exhaust-gas stream leaving the internal combustion engine (8).

7. Method according to Claim 5 or 6, **characterized in that** part of the exhaust gas is led past the high-pressure turbine (9) via a high-pressure bypass (10) and part of the exhaust gas is led past the low-pressure turbine (12) via a low-pressure bypass (13).

## Revendications

1. Procédé de suralimentation à plusieurs étages de moteurs combustion interne comportant un dispositif de suralimentation qui conduit l'air frais tout d'abord dans un compresseur basse pression (2), au moins une partie de la veine d'air comprimé traverse un compresseur haute pression (4) et le reste de l'air frais comprimé dans le compresseur basse pression (2) traverse une dérivation de compresseur (5) contournant le compresseur haute pression (4) et finalement tout l'air frais alimente le moteur à combustion interne (8),
la dérivation de compresseur (5) étant libérée ou fermée par une soupape (6) à commande automatique en fonction de la différence de pression au niveau du compresseur haute pression (4),
**caractérisé en ce que**
la soupape automatique (6) comporte un organe de refoulement (17) logé dans un boîtier de soupape (16), et divisé en une première partie (18) et en une seconde partie (19),
la seconde partie (19) de l'organe de refoulement étant reliée au boîtier de soupape et la première partie (18) de l'organe de refoulement, mobile, tournée vers le côté d'attaque du flux étant guidée par la seconde partie de refoulement (19) et ferme ou libère la dérivation de compresseur (6), et la partie de refoulement comporte un élément de ressort (22) qui, lorsque la soupape est fermée, positionne la première partie de refoulement (18) contre son siège de fermeture et
la soupape automatique (6) s'ouvre dès que la pression en aval de la soupape (6) est inférieure d'une différence de pression d'ouverture (Δp), réglée sur la soupape par rapport à la pression en amont de la soupape (6), la différence de pression d'ouverture réglée sur la soupape se réglant sur une valeur inférieure à 100 mbars.

2. Procédé selon la revendication 1,
**caractérisé en ce que**
la deuxième partie de refoulement (19) comporte un prolongement (34) et la première partie de refoulement (18) comporte un prolongement (35) et
lors du mouvement de la première partie de refoulement (18) en direction de la seconde partie de refoulement (19), entre le premier prolongement (34) de la seconde partie de refoulement (19) et le prolongement (35) de la première partie de refoulement (18), il se forme un coussin d'air dans un manchon (25), ce coussin d'air amortissant le mouvement de la première partie de refoulement (18).

3. Procédé selon la revendication 1 ou 2,
**caractérisé en ce qu'**
après compression dans le compresseur basse pression (2), l'air frais est refroidi dans un premier échangeur de chaleur (3).

4. Procédé selon l'une des revendications 1 à 3,
**caractérisé en ce qu'**
avant l'entrée dans le moteur à combustion interne (8), l'air frais est refroidi dans un second échangeur de chaleur (7).

5. Procédé selon l'une des revendications 1 à 4,
**caractérisé en ce que**
le compresseur haute pression (4) est entraîné par une turbine haute pression (9) et le compresseur basse pression (2) est entraîné par une turbine basse pression (12).

6. Procédé selon la revendication 5,
**caractérisé en ce que**
la turbine haute pression (9) et la turbine basse pression (12) sont entraînées par une veine de gaz d'échappement du moteur à combustion interne (8).

7. Procédé selon la revendication 5 ou 6,
**caractérisé en ce qu'**
une partie des gaz d'échappement passe par une dérivation haute pression (10) contournant la turbine haute pression (9) et une partie des gaz d'échappement passe par une dérivation basse pression (13) contournant la turbine basse pression (12).
